# EUROPEAN PATENT SPECIFICATION

(11) **EP 2 586 845 B1**
(45) Date of publication and mention of the grant of the patent: **25.01.2017**
(21) Application number: 11306404.2
(22) Date of filing: 28.10.2011
(51) Int. Cl.: C09K 8/40, C09K 8/42

(54) **COMPOSITIONS AND METHODS FOR COMPLETING SUBTERRANEAN WELLS**
ZUSAMMENSETZUNGEN UND VERFAHREN ZUR FERTIGSTELLUNG UNTERIRDISCHER BOHRLÖCHER
COMPOSITIONS ET PROCÉDÉS POUR COMPLÉTER DES PUITS SOUTERRAINS

(43) Date of publication of application: 01.05.2013
(73) Proprietor: Services Pétroliers Schlumberger, 75007 Paris (FR); Schlumberger Technology B.V., 2514 JG The Hague (NL); Schlumberger Holdings Limited, Tortola (VG); Prad Research Development Limited, Tortola (VG)
(72) Inventor: Michaux, Michel, 92142 Clamart (FR); Caritey, Jean Philippe, 92142 Clamart (FR); Gabilly, Laurent, 92142 Clamart (FR)
(74) Representative: Schlumberger Cambridge Research Limited

(56) References cited:
- EP-A1- 0 207 536
- EP-A1- 0 273 471
- EP-A1- 0 621 330
- GB-A- 2 382 363
- US-A1- 2010 025 039

## Description

### BACKGROUND

The statements in this section merely provide background information related to the present disclosure and may not constitute prior art.

This disclosure relates to compositions and methods for completing subterranean wells, in particular, fluid compositions and methods for completion operations during which the fluid compositions are pumped into a wellbore and make contact with subterranean rock formations.

In the course of completing oil and gas wells and the like, various types of fluids are circulated in the wellbore. These fluids include, but are not limited to, drilling fluids, spacer fluids, cement slurries and gravel-packing fluids. In addition, these fluids typically contain solid particles.

Cement slurries are usually incompatible with most drilling fluids. If the cement slurry and drilling fluid commingle, a highly viscous mass may form that can cause several problems. Cement slurry can channel through the viscous mass. Unacceptably high friction pressures can develop during the cement job. Plugging of the annulus can result in job failure. In all of these situations, zonal isolation may be compromised, and expensive remedial cementing may be required.

Consequently, intermediate fluids called preflushes are often pumped as buffers to prevent contact between cement slurries and drilling fluids. Preflushes can be chemical washes that contain no solids or spacer fluids that contain solids and can be mixed at various densities.

Chemical washes are preflushes with a density and a viscosity very close to that of water or oil. The simplest chemical wash is fresh water; however, for more efficient drilling-fluid thinning and dispersion, chemical washes that contain dispersants and surfactants are more commonly used.

EP0207536 relates to spacer composition comprising a biopolymer selected from xanthan gum, scleroglucan and biopolymer from Azotobacter, a high molecular weight anionic polyelectrolyte which can be polystyrene sulfonate, and a low molecular weight anionic polyelectrolyte which can be polystyrene sulfonate.

This formulation being able to be complemented with densifying agents, such as particulate material, until a density of 1.05 to 1.9 or even 2.4 is obtained.

EP0621330 discloses drilling fluids, fracturing fluids or spacers fluids comprising the combination of three momentous features. The compositions of EP0621330 comprise the choice of at least three mineral particulate materials that are insoluble in an aqueous medium. The at least three size ranges being "disjointed" ; the choice of the proportions in the solid matters is defined in the choice of mineral particulate materials in relation to the mixing so that the achieved fluid should be located in the hindered settling state. Furthermore the choice of the proportions in the solid matters is defined according to the choice of mineral particulate materials between each other and according to their respective size ranges, so that the operations are run at the maximum packing volume fraction of the whole of the considered particles.

Spacers are preflushes with carefully designed densities and rheological properties. Spacers are more complicated chemically than washes. Viscosifiers are necessary to suspend the solids and control the rheological properties, and usually comprise water-soluble polymers, clays or both. Other chemical components include dispersants, fluid-loss control agents, weighting agents and surfactants. A thorough discussion concerning the uses and compositions of preflushes may be found in the following publication. Daccord G, Guillot D and Nilsson F: "Mud Removal," in Nelson EB and Guillot D (eds.): Well Cementing-2nd Edition, Houston: Schlumberger (2006) 183-187.

For optimal fluid displacement, the density of a spacer fluid should usually be higher than that of the drilling fluid and lower than that of the cement slurry. Furthermore, the viscosity of the spacer fluid is usually designed to be higher than the drilling fluid and lower than the cement slurry. The spacer fluid must remain stable throughout the cementing process (i.e., no free-fluid development and no sedimentation of solids). In addition, it may be necessary to control the fluid-loss rate.

As well depth increases, the formation temperature and pressure also increase. Consequently, to maintain well control and prevent invasion of formation fluids into the wellbore, the hydrostatic pressure exerted by the drilling fluid, spacer fluid and cement slurry must be higher than or equal to the formation pressure. In deep wells, it is often necessary to prepare fluids with densities between 2037 kg/m³ (17 lbm/gal) and 2756 kg/m³ (23 lbm/gal). In addition, the bottomhole temperature can exceed 260°C (500°F).

These conditions present challenges for those designing spacer fluids with optimal densities, rheological properties, stability and fluid-loss rates. Achieving high fluid densities typically requires the addition of heavy particles comprising barite, hematite, ilmenite and haussmanite. The solid volume fraction necessary to achieve high densities is also elevated. However, keeping the particles in suspension is difficult at high temperatures, possibly leading to spacer instability. It would be therefore desirable to provide means by which spacer-fluid rheological properties, stability and fluid-loss control may be better controlled at elevated temperatures.

### SUMMARY

In an aspect, embodiments relate to methods for cementing a borehole in a subterranean well, the borehole being initially filled with a drilling fluid, comprising: preparing a spacer fluid comprising water, polystyrene sulfonate, and a mixture of particulate materials, the particulate materials being chosen such that the mixture has at least a trimodal particle-size distribution; pumping the spacer fluid into the well such that it displaces the drilling fluid; and pumping a cement slurry into the well such that it displaces the spacer fluid, wherein the spacer-fluid density is higher than about 1920 kg/m³, wherein the polystyrene sulfonate consists of polystyrene sulfonate of molecular weight higher than 800,000 Daltons and up to 6,000,000 Daltons,
and wherein the well has a circulating temperature higher than about 150°C and up to 290°C.

In a further aspect, embodiments relate to methods for fluid displacement in an annulus, the annulus being initially filled with a first fluid, comprising: preparing a second fluid comprising water, polystyrene sulfonate, and a mixture of particulate materials, the particulate materials being chosen such that the mixture has at least a trimodal particle-size distribution; and pumping the second fluid into the annulus such that it displaces the first fluid.

### BRIEF DESCRIPTION OF THE DRAWINGS

Figure 1 shows the viscosity versus time and temperature for a spacer fluid in which the particulate materials comprised crystalline silica, barite and bentonite.
Figure 2 shows the rheological behavior of the spacer fluid of Fig. 1 during an 8-hour heating period at 254°C and 69 MPa.
Figure 3 shows the viscosity versus time and temperature for a spacer fluid in which the particulate materials comprised crystalline silica, barite and bentonite. The fluid further comprised a mutual solvent and a surfactant.
Figure 4 shows the plastic viscosity and yield stress versus temperature of the spacer fluid of Fig. 3.
Figure 5 shows the rheological behavior of the spacer fluid of Fig. 3 during an 8-hour heating period at 254°C and 69 MPa.
Figure 6 shows the plastic viscosity and yield stress versus temperature for a oil-base mud.
Figure 7 shows the viscosity versus time and temperature for a spacer fluid in which the particulate materials comprised calcium carbonate, barite and bentonite. The fluid further comprised a mutual solvent and a surfactant.
Figure 8 shows the plastic viscosity and yield stress versus temperature of the spacer fluid of Fig. 7.
Figure 9 shows the rheological behavior of the spacer fluid of Fig. 7 during an 8-hour heating period at 254°C and 69 MPa.
Figure 10 shows the viscosity versus time and temperature for a spacer fluid in which the particulate materials comprised crystalline silica, barite and bentonite. The fluid further comprised a mutual solvent and a surfactant.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

Without wishing to be bound by any theory, the loss of stability may result from hydrolysis or thermal degradation of the water-soluble polymers, a drop in the viscosity of the interstitial water or combinations thereof. These problems may also affect the rheological properties of the spacer, negatively affecting its fluid-displacement ability.

Controlled rheological properties, stability and fluid-loss control are important performance parameters of spacer fluids. The current application discloses compositions and uses of spacer fluids whose properties are controllable and stable at elevated temperatures.

The authors have determined that stable aqueous spacer fluids with controllable rheological properties and fluid-loss control may be prepared by adding polystyrene sulfonate and blends of particulate materials that are preferably chosen such that the solid mixture has at least a trimodal particle-size distribution. The spacer properties are stable throughout a wide temperature range-from ambient temperature (which would be experienced during spacer-fluid preparation at the surface) to bottomhole temperatures of at least 260°C. For the embodiments in the present disclosure, the bottomhole temperature is preferably higher than about 150°C, temperature up to 290°C may even be envisaged.

The polystyrene-sulfonate concentration in the spacer fluid is preferably between about 0.6% and 5.0% by weight of water, and more preferably between 1.5% and 4.0% by weight of water. Without wishing to be bound by any theory, the primary role of the polystyrene sulfonate is to disperse the solid particles and prevent fluid gelation (i.e., strong viscosification). In addition, the polymer may enhance the spacer-fluid stability, increase the fluid viscosity and provide fluid-loss control, still without wishing to be bound by any theory, the inventors believe that the molecular weight of the polystyrene sulfonate has an impact on the fluid loss control, accordingly, when fluid loss is an issue, the polystyrene sulfonate has a molecular weight of from 800,000 Daltons to 6,000,000 Daltons, preferably about 1,000,000 Daltons.

The trimodal particle-size distribution of the particulate materials allows the spacer fluid to have a higher solid-volume fraction, yet retain optimal rheological properties and stability. The solid volume fraction is the ratio between the volume of solids in a slurry and the total slurry volume. The solid volume fraction can be maximized by using coarse, medium and fine particles in specific volumetric ratios. The fine particles fit in the void spaces between the medium-size particles, and the medium-size particles fit in the void spaces between the coarse particles. For two consecutive granulometric classes, the order of magnitude between the mean particle diameter (d₅₀) of each class should ideally be between 7 and 10. For the disclosed spacer fluids, the average particle size of the first material is preferably between about 100 and 300 µm, the second material is preferably between about 10 and 30 µm and the third material is preferably between about 1 and 3 µm. The solid volume fractions of the disclosed spacer fluids are preferably between about 0.50 and 0.55. A thorough presentation concerning engineered particle size slurries may be found in the following publication. Nelson EB, Drochon B, Michaux M and Griffin TJ: "Special Cement Systems," in Nelson EB and Guillot D (eds.): Well Cementing-2nd Edition, Houston: Schlumberger (2006) 251-256.

The particulate materials are preferably blends that comprise silica and barite or calcium carbonate and barite. It is envisioned that additional particulate materials may also be incorporated, including (but not limited to) hematite, ilmenite, rutile, aluminum oxide and hausmannite. Combinations of calcium carbonate (as coarse particles) and barite (as medium-size and fine particles); and combinations of crystalline silica (as coarse particles) and barite (as medium-size and fine particles) are preferred.

The spacer fluid may further comprise a clay mineral. Of these, bentonite, attapulgite, laponite, or sepiolite, and mixtures thereof are preferred. Without wishing to be bound by any theory, the clays may increase the yield stress of the spacer fluid, thereby enhancing fluid stability.

The spacer fluid may also further comprise a mutual solvent or one or more surfactants, or combinations thereof. Without wishing to be bound by any theory, such materials may improve compatibility between the spacer fluid and oil-base or emulsion drilling fluids.

The preceding paragraphs describing the nature of the spacer fluids shall be applicable to the following aspects of the disclosure.

In an aspect, embodiments relate to methods for cementing a borehole in a subterranean formation, wherein the borehole is initially filled with a drilling fluid. A spacer fluid is prepared that comprises water, polystyrene sulfonate, and a mixture of particulate materials, wherein the particulate materials are chosen such that the mixture has at least a trimodal particle-size distribution. The three particulate materials do not necessarily have to be different chemically. They could be the same substance, provided in three different particle sizes.

The spacer fluid is pumped into the well such that it displaces the drilling fluid. The displacement may occur during a primary cement job, wherein the spacer fluid pushes the drilling fluid out of the casing interior, up through the annular region between the casing and the formation, or the casing and another casing string, and then out of the wellbore. Or, in the case of reverse cementing, the spacer would push drilling fluid down the annulus, up through the casing interior, and out of the wellbore. The spacer fluid may also be used during remedial cementing operations, particularly plug cementing. Like primary cementing, it may be necessary to prevent commingling between the cement slurry and the drilling fluid.

The cement slurry may comprise Portland cement, calcium aluminate cement, fly ash, blast furnace slag, cement kiln dust, lime/silica blends, magnesium oxychloride, chemically bonded phosphate ceramics, zeolites, or geopolymers, or combinations thereof. Of these, Portland cement is preferred.

Are also described, embodiments which relate to methods for fluid displacement in an annulus. The annulus is initially filled with a first fluid. A second fluid is prepared that comprises water, polystyrene sulfonate and a mixture of particulate materials, wherein the particulate materials are chosen such that the mixture has at least a trimodal particle-size distribution. The second fluid is pumped into the annulus such that it displaces the first fluid.

Further illustration of the disclosure is provided by the following examples.

### EXAMPLES

All of the tests presented in the following examples were performed in accordance with recommended practices specified by the American Petroleum Institute (API) and the International Organization for Standards (ISO). The methods are presented in the following publication-*Petroleum and Natural Gas Industries-Cements and Materials for Well Cementing-Part 2: Testing of Well Cements,* International Organization for Standards Publication No. 10426-2.

### EXAMPLE 1

A particle blend was prepared that was composed of 50% by volume of solid blend (BVOB) crystalline silica (particle median size of 154 µm), 30% BVOB barite (particle median size of 17 µm), and 20% BVOB barite (particle median size of 1.5 µm. Bentonite was also added to this blend at a concentration of 0.4% BWOB. A fluid was prepared consisting of fresh water, 1.7 L/tonne of solid blend of antifoam agent (polypropylene glycol), and 33.4 L/tonne of solid blend of an aqueous solution containing 25% by weight of polystyrene sulfonate (Versa-TL™ 501 available from Akzo Nobel).

The particle blend was mixed with the fluid at a solid volume fraction (SVF) of 0.50 to prepare a spacer fluid. The spacer fluid was stirred for 35 seconds at 12,000 RPM using a Waring blender (according to the ISO/API procedure for mixing cement slurries). The density of the spacer fluid was 2229 kg/m³ (18.6 lbm/gal).

The rheological properties of the spacer were measured immediately after mixing (at 25°C), and after a 20-min conditioning period at 85°C in an atmospheric consistometer rotating at 150 RPM. A Chan 35™ rheometer (available from Chandler Engineering, Tulsa, OK, USA) was used. The R1B5 rotor/bob geometry was necessary due to the presence of coarse particles. The results, presented in Table 1, show that the spacer was well dispersed after mixing and after the 20-minute conditioning period at 85°C. No settling was noted at the bottom of the rheometer cup.

**Table 1: Rheological data after mixing and after a 20-minute conditioning period at 85°C**

| Speed | 300 RPM | 200 RPM | 100 RPM | 60 RPM | 30 RPM | 6 RPM | 3 RPM |
|---|---|---|---|---|---|---|---|
| 25°C | 72 | 50 | 27 | 17.5 | 10 | 3 | 2 |
| 85°C | 36 | 26.5 | 15.5 | 11 | 6.5 | 2.5 | 2 |

The amount of free fluid and the density gradient (difference between the density at the top of the cell and the density at the bottom of the cell divided by the average density) were measured after 2 hours at 85°C. Fluid-loss measurements were performed at 204°C, 232°C, and 260°C, using a stirred fluid-loss cell (90-min heat-up time). The differential pressure was 6.9 MPa and the filtration medium was a 325-mesh screen. Results are presented in Table 2.

**Table 2: Free fluid and density gradient at 85°C, and fluid loss at 204°C, 232°C and 260°C**

| Free Fluid (%) | Density Gradient (%) | ISO/API Fluid Loss (mL/30 min) | | |
|---|---|---|---|---|
| | | At 204°C | At 232°C | At 260°C |
| 0 | 0.2 | 114 | 155 | 203 |

These results show that the spacer was very stable at 85°C. The fluid loss increased with temperature, but was nonetheless acceptable at temperatures as high as 260°C.

The density gradient was also measured at 204°C and 260°C after conditioning the spacer in a stirred fluid-loss cell. The heat-up time was 90 minutes, and the spacer remained at the test temperature for 45 minutes (30 minutes under agitation at 150 RPM and then 15 minutes under static condition). The spacer was left under static condition during the cooling period, and the density gradient was measured at room temperature. The results, shown in Table 3, showed that the spacer conditioned at 204°C was very stable. The density gradient was higher at 260°C, but was acceptable. In both cases the amount of free fluid at the top of the spacer column was negligible.

**Table 3: Density gradient at 204°C and 260°C**

| Density Gradient (%) | |
|---|---|
| 204°C | 260°C |
| 0.7 | 4.7 |

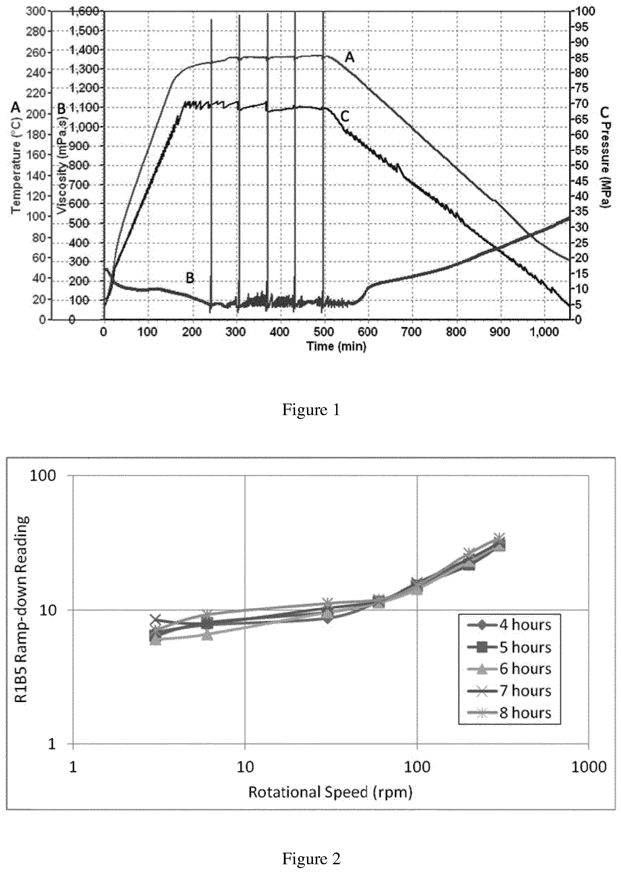

The viscosity of the spacer fluid was measured at 254°C and 69 MPa (10,000 psi) using a Chandler 7600 rheometer (R1B5 geometry). The heat-up time was about 4 hours, and the spacer remained at this temperature for 4 hours. The viscosity was recorded continuously at 100 RPM, corresponding to a shear rate of 84 s⁻¹. The viscosity curve is shown in Figure 1. The rheometer readings, shown in Fig. 2, were recorded after 4, 5, 6, 7, and 8 hours (corresponding to the vertical lines on the viscosity curve in Fig. 1), varying the rotational speed between 3 and 300 RPM.

These data show that the viscosity of the spacer decreased during the heating period, but did not change significantly with time when the spacer was left at 254°C and (69 MPa) 10,000 psi. The spacer did not become gelled (as evidenced by the low yield stress), nor was the spacer overdispersed (the yield stress was above zero).

### EXAMPLE 2

A blend composed of 50% BVOB (by volume of blend) crystalline silica (particle median size of 154 µm), 30% BVOB barite (particle median size of 17 µm), and 20% BVOB barite (particle median size of 1.5 µm) was prepared. 0.4% BWOB (by weight of blend) bentonite was added to this blend.

A fluid containing fresh water, 1.7 L/tonne of blend of antifoam agent (polypropylene glycol), 33.4 L/tonne of blend of an aqueous solution containing 25% by weight of polystyrene sulfonate (Versa-TL™ 501 available from Akzo Nobel), 25 L/tonne of blend of mutual solvent (ethylene glycol monobutyl ether), and 25 L/tonne of blend of surfactant (EZEFLO™ available from Schlumberger) was prepared.

The solid blend was mixed with the fluid at a solid volume fraction of 0.52. The spacer was stirred for 35 seconds at 12,000 RPM using a Waring blender (ISO/API procedure for mixing cement slurries). The density of the spacer was 2271 kg/m³ (18.95 lbm/gal). The rheological properties of the spacer were measured after mixing (at 25°C) and after a 20-minute conditioning period at 85°C in an atmospheric consistometer rotating at 150 RPM. A Chan 35™ rheometer was used. The R1B5 rotor/bob geometry was necessary due to the presence of coarse particles. Results are presented in Table 4.

**Table 4: Rheological data after mixing and after a 20-minute conditioning period at 85°C**

| Speed | 300 RPM | 200 RPM | 100 RPM | 60 RPM | 30 RPM | 6 RPM | 3 RPM |
|---|---|---|---|---|---|---|---|
| At 25°C | 213 | 154 | 86.5 | 57 | 32.5 | 9.5 | 6 |
| At 85°C | 137 | 100 | 60 | 41.5 | 26 | 10 | 7.5 |

These results show that the spacer was well dispersed after mixing and after the 20-minute conditioning period at 85°C. No settling was noted at the bottom of the rheometer cup. The amount of free fluid and the density gradient (difference between the density at the top of the cell and the density at the bottom of the cell divided by the average density) were measured after 2 hours at 85°C. The fluid loss was measured at 260°C and 6.9 MPa using a stirred fluid-loss cell equipped with a 325-mesh screen (90-min heat-up time). Results are reported in Table 5.

**Table 5: Free fluid and density gradient at 85°C, and fluid loss at 260°C**

| Free Fluid (%) | Density Gradient (%) | ISO/API Fluid Loss (mL/30 min) |
|---|---|---|
| 0 | 1.1 | 115 |

The results show that the spacer was very stable at 85°C. The fluid loss measured at 260°C was low, demonstrating that the polystyrene sulfonate remains effective at this temperature.

The density gradient was also measured at 260°C after conditioning the spacer in a stirred fluid-loss cell. The heat-up time was 90 minutes, and the spacer remained at the test temperature for 45 minutes (30 minutes under agitation at 150 RPM and then 15 minutes under static condition). The spacer was left under static condition during the cooling period, and the density gradient was measured at room temperature. The density gradient was only 2.9%, showing that the spacer conditioned for 45 minutes at 260°C remained stable.

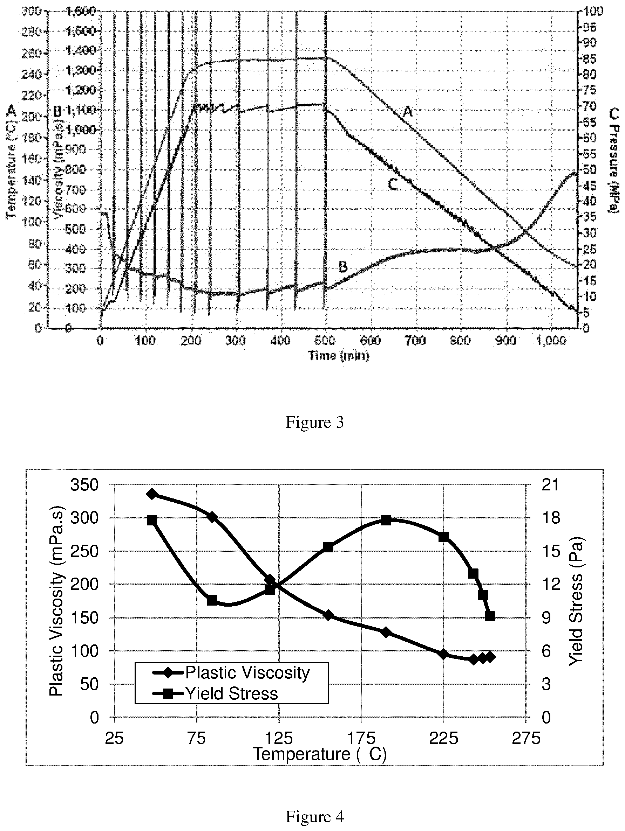

The rheological properties were measured at 254°C and 69 MPa (10,000 psi) using a Chandler 7600 rheometer using the R1B5 geometry. The heat up time was about 4 hours, and the spacer remained at this temperature for 4 hours. The viscosity was continuously recorded at 100 RPM, corresponding to a shear rate of 84 s⁻¹. The viscosity curve is shown in Fig. 3. These data show that the viscosity of the spacer decreased during the heating period, and then did not change significantly with time at 254°C and 69 MPa (10,000 psi).

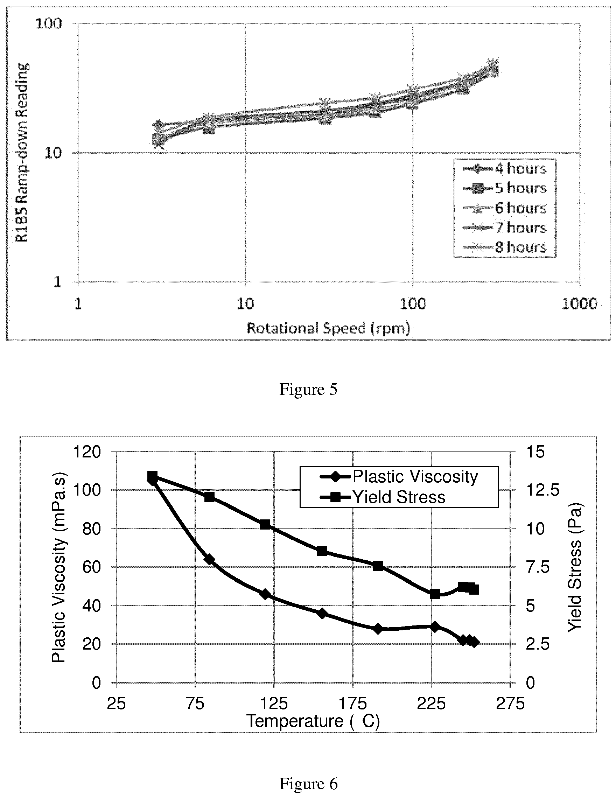

The rheological properties were measured after different times (corresponding to the vertical lines on the viscosity curve in Fig. 3), and the plastic viscosity and yield stress were calculated using the Bingham plastic model. The evolution of these parameters as a function of temperature is shown in Figure 4. The plastic viscosity continuously decreased during the heating period. The yield stress varied from about 9.12 Pa (19 lbf/100ft²) to about 17.8 Pa (37 lbf/100ft²) depending on the temperature. At 254°C the plastic viscosity was about 90 MPa-s (90 cP) and the yield stress was about 9.12 Pa (19 lbf/100ft²). The rheological properties did not change significantly when the spacer was left for 4 hours at 254°C and 69 MPa (10,000 psi) (Fig. 5).

The evolution of the plastic viscosity and yield stress of an oil-base mud as a function of temperature is shown in Fig. 6. The oil-base mud was obtained from M-I SWACO, Houston, TX. The density of the mud was 2271 kg/m3 (18.95 lbm/gal). At 254°C, the plastic viscosity was about 20 cP and the yield stress was about 6.0 Pa (12.5 lbf/100 ft²). Figs. 4 and 6 show that the plastic viscosity and yield stress of the spacer are higher than that of the oil-base mud. Therefore, the rheological properties of the spacer are adequate to displace this mud.

### EXAMPLE 3

A blend composed of 50% BVOB (by volume of blend) calcium carbonate (particle median size of 146 µm), 30% BVOB barite (particle median size of 17 µm), and 20% BVOB barite (particle median size of 1.5 µm) was prepared. 0.4% BWOB (by weight of blend) bentonite was added to this blend.

A fluid containing fresh water, 1.7 L/tonne of blend of antifoam agent (polypropylene glycol), 33.4 L/tonne of blend of an aqueous solution containing 25% by weight of polystyrene sulfonate (Versa-TL™ 501 available from Akzo Nobel), 25 L/tonne of blend of mutual solvent (ethylene glycol monobutyl ether), and 25 L/tonne of blend of surfactant (EZEFLO™ available from Schlumberger) was prepared.

The solid blend was mixed with the fluid at a solid volume fraction of 0.52. The spacer was agitated for 35 seconds at 12,000 RPM using a Waring blender (ISO/API procedure for mixing cement slurries). The density of the spacer was 2284 kg/m³ (19.06 lbm/gal).

The rheological properties of the spacer were measured after mixing (at 25°C) and after a 20-minute conditioning period at 85°C in an atmospheric consistometer rotating at 150 RPM. A Chan 35™ rheometer was used. The R1B5 geometry was necessary due to the presence of coarse particles. The results, shown in Table 6, show that the spacer was well dispersed after mixing and after the 20-minute conditioning period at 85°C. No settling was noted at the bottom of the rheometer cup.

**Table 6: Rheological data after mixing and after a 20-minute conditioning period at 85°C**

| Speed | 300 RPM | 200 RPM | 100 RPM | 60 RPM | 30 RPM | 6 RPM | 3 RPM |
|---|---|---|---|---|---|---|---|
| At 25°C | 215 | 155 | 88 | 59 | 34.5 | 11 | 7.5 |
| At 85°C | 141 | 103 | 62 | 43 | 27 | 11 | 8.5 |

The amount of free fluid and the density gradient (difference between the density at the top of the cell and the density at the bottom of the cell divided by the average density) were measured after 2 hours at 85°C. Results are reported in Table 7. These results show that the spacer was stable at 85°C.

**Table 7: Free fluid and density gradient at 85°C**

| Free Fluid (%) | Density Gradient (%) |
|---|---|
| 0 | 0 |

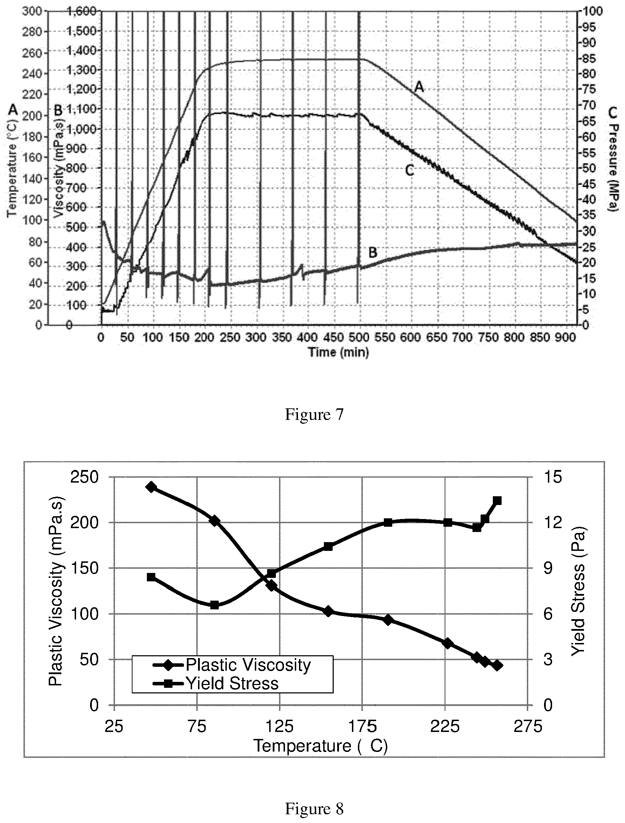

The rheological properties of the spacer were measured at 254°C and 69 MPa (10,000 psi) using a Chandler 7600 rheometer and the R1B5 geometry. The heat up time was about 4 hours, and the spacer remained at this temperature for 45 minutes. The viscosity was continuously recorded at 100 RPM, corresponding to a shear rate of 84 s⁻¹. The viscosity curve is shown in Fig. 7. These data show that the viscosity of the spacer decreased during the heating period, and then did not change significantly with time when the spacer remained at 254°C and 69 MPa (10,000 psi).

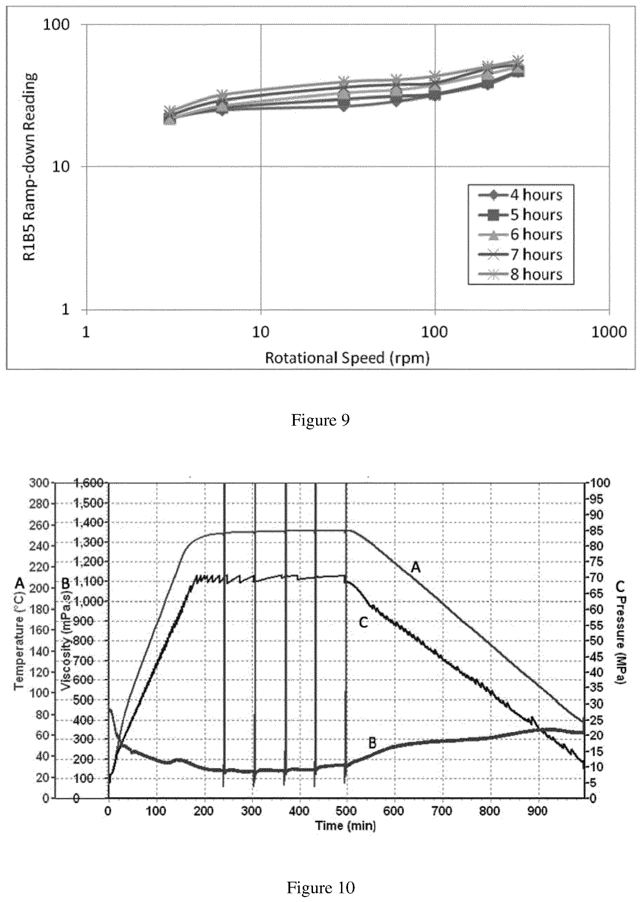

The rheological properties were measured after different times (corresponding to the vertical lines on the viscosity curve in Fig. 7), and the rheological parameters (i.e., the plastic viscosity and yield stress) were calculated using the Bingham plastic model. The evolution of these parameters as a function of temperature is shown in Fig. 8. The plastic viscosity continuously decreased during the heating period. The yield stress varied from about 6.7 Pa (14 lbf/100ft²) to about 13.4 Pa (28 lbf/100ft²), depending on the temperature. At 254°C the plastic viscosity was about 45 mPa-s (45 cP) and the yield stress was about 13.4 Pa (28 lbf/100ft²). The rheological properties did not change significantly when the spacer remained for 4 hours at 254°C and 69 MPa (10,000 psi) (Fig. 9).

### EXAMPLE 4

A blend composed of 50% BVOB (by volume of blend) crystalline silica (particle median size of 154 µm), 30% BVOB crystalline silica (particle median size of 25 µm), and 20% BVOB barite (particle median size of 1.5 µm) was prepared. 0.4% BWOB (by weight of blend) bentonite was added to this blend.

A fluid containing fresh water, 1.7 L/tonne of blend of antifoam agent (polypropylene glycol), 33.4 L/tonne of blend of an aqueous solution containing 25% by weight of polystyrene sulfonate (Versa-TL™ 501 available from Akzo Nobel), 25 L/tonne of blend of mutual solvent (ethylene glycol monobutyl ether), and 25 L/tonne of blend of surfactant (EZEFLO™ from Schlumberger) was prepared.

The solid blend was mixed with the fluid at a solid volume fraction of 0.50. The spacer was agitated for 35 seconds at 12,000 RPM using a Waring blender (ISO/API procedure for mixing cement slurries). The density of the spacer was 1995 kg/m³ (16.65 lbm/gal).

The rheological properties of the spacer were measured after mixing (at 25°C) and after a 20-minute conditioning period at 85°C in an atmospheric consistometer rotating at 150 RPM. A Chan 35™ rheometer was used. The R1B5 geometry was necessary due to the presence of coarse particles. The results, shown in Table 8, show that the spacer was well dispersed after mixing and after the 20-minute conditioning period at 85°C. No settling was noted at the bottom of the rheometer cup.

**Table 8: Rheological data after mixing and after a 20-minute conditioning period at 85°C**

| Speed | 300 RPM | 200 RPM | 100 RPM | 60 RPM | 30 RPM | 6 RPM | 3 RPM |
|---|---|---|---|---|---|---|---|
| At 25°C | 158 | 110 | 61 | 39 | 21 | 6 | 4 |
| At 85°C | 90 | 58 | 33.5 | 22.5 | 13.5 | 4.5 | 3 |

The amount of free fluid and the density gradient (difference between the density at the top of the cell and the density at the bottom of the cell divided by the average density) were measured after 2 hours at 85°C. The results, reported in Table 9, indicate that the spacer was very stable at 85°C.

**Table 9: Free fluid and density gradient at 85°C**

| Free Fluid (%) | Density Gradient (%) |
|---|---|
| 0 | 0 |

The density gradient was also measured at 260°C after conditioning the spacer in a stirred fluid-loss cell. The heat-up time was 90 minutes, and the spacer remained at the test temperature for 45 minutes (30 minutes under agitation at 150 RPM and then 15 minutes under static condition). The spacer was left under static condition during the cooling period, and the density gradient was measured. The density gradient was 4.1%, showing that the stability of the spacer conditioned for 45 minutes at 260°C was acceptable.

The rheological properties of the spacer were measured at 254°C and 69 MPa (10,000 psi) using a Chandler 7600 rheometer and the R1B5 geometry. The heat-up time was about 4 hours, and the spacer was left for 4 hours at this temperature. The viscosity was continuously recorded at 100 RPM, corresponding to a shear rate of 84 s⁻¹. The viscosity curve is shown in Fig. 10. These data show that the viscosity of the spacer decreased during the heating period, and then did not change significantly with time when the spacer was left for 4 hours at 254°C and 69 MPa (10,000 psi).

## Claims

1. A method for cementing a borehole in a subterranean well, wherein the borehole is initially filled with a drilling fluid, comprising:
(i) preparing a spacer fluid comprising water, polystyrene sulfonate, and a mixture of particulate materials, wherein the particulate materials are chosen such that the mixture has at least a trimodal particle-size distribution;
(ii) pumping the spacer fluid into the well such that it displaces the drilling fluid; and
(iii) pumping a cement slurry into the well such that it displaces the spacer fluid, wherein the spacer-fluid density is higher than about 1920 kg/m³, wherein the polystyrene sulfonate consists of polystyrene sulfonate of molecular weight higher than 800,000 Daltons and up to 6,000,000 Daltons,
and wherein the well has a circulating temperature higher than about 150°C and up to 290°C.

2. The method of claim 1 , wherein the particulate materials comprise a combination of silica and barite, or a combination of calcium carbonate and barite.

3. The method of any one of claims 1-2, wherein a first particulate material has an average particle size between about 100 and 300 µm, a second particulate material has an average particle size between about 10 and 30 µm, and a third particulate material has an average particle size between about 1 and 3 µm.

4. The method of any one of claims 1-3, wherein the spacer fluid further comprises a clay mineral.

5. The method of any one of claims 1-4, wherein the solid volume fraction in the spacer fluid is between about 0.50 and 0.55.

6. The method of any one of claims 1-5, wherein the spacer fluid comprises a mutual solvent, one or more surfactants, or a combination thereof.

7. The method of any one of claims 1-6, wherein the polystyrene-sulfonate concentration in the spacer fluid is between 0.6% and 5.0% by weight of water.

8. A method for fluid displacement in an annulus, wherein the annulus is initially filled with a first fluid, comprising:
(i) preparing a second fluid comprising water, polystyrene sulfonate, and a mixture of particulate materials, wherein the particulate materials are chosen such that the mixture has at least a trimodal particle-size distribution; and
(ii) pumping the second fluid into the annulus such that it displaces the first fluid, wherein the spacer-fluid density is higher than about 1920 kg/m³.

9. The method claim 8, wherein the particulate materials comprise a combination of silica and barite, or a combination of calcium carbonate and barite.

10. The method of claim 8 or 9, wherein the molecular weight of the polystyrene sulfonate is higher than 800,000 Daltons and up to 6,000,000 Daltons.

11. The method of any one of claims 8-10, wherein a first particulate material has an average particle size between about 100 and 300 µm, a second particulate material has an average particle size between about 10 and 30 µm, and a third particulate material has an average particle size between about 1 and 3 µm.

12. The method of any one of claims 8-11, wherein the solid volume fraction in the spacer fluid is between about 0.50 and 0.55.

## Patentansprüche

1. Verfahren zum Zementieren eines Bohrlochs in einer unterirdischen Bohrung, wobei das Bohrloch anfangs mit einem Bohrfluid gefüllt ist, umfassend:
(i) Vorbereiten einer Distanzflüssigkeit, die Wasser, Polystyrolsulfonat und eine Mischung von Schwebstoffen enthält, wobei die Schwebstoffe so ausgewählt sind, dass die Mischung zumindest eine trimodale Teilchengrößenverteilung besitzt;
(ii) Pumpen der Distanzflüssigkeit in die Bohrung, so dass sie das Bohrfluid verdrängt; und
(iii) Pumpen eines Zementschlamms in die Bohrung, so dass er die Distanzflüssigkeit verdrängt, wobei die Dichte der Distanzflüssigkeit größer als etwa 1920 kg/m³ ist, wobei das Polystyrolsulfonat aus Polystyrolsulfonat mit einem Molekulargewicht von mehr als 800.000 Daltons und bis zu 6.000.000 Daltons besteht,
und wobei die Bohrung eine Zirkulationstemperatur von mehr als etwa 150°C und bis zu 290°C besitzt.

2. Verfahren nach Anspruch 1, wobei die Schwebstoffe eine Kombination von Siliziumdioxid und Baryt oder eine Kombination von Calziumcarbonat und Baryt umfassen.

3. Verfahren nach einem der Ansprüche 1-2, wobei ein erster Schwebstoff eine mittlere Teilchengröße zwischen etwa 100 und 300 µm besitzt, ein zweiter Schwebstoff eine mittlere Teilchengröße zwischen etwa 10 und 30 µm besitzt und ein dritter Schwebstoff eine mittlere Teilchengröße zwischen etwa 1 und 3 µm besitzt.

4. Verfahren nach einem der Ansprüche 1-3, wobei die Distanzflüssigkeit ferner ein Tonmineral enthält.

5. Verfahren nach einem der Ansprüche 1-4, wobei der Feststoffvolumenanteil in der Distanzflüssigkeit zwischen etwa 0,50 und 0,55 liegt.

6. Verfahren nach einem der Ansprüche 1-5, wobei die Distanzflüssigkeit ein gemeinsames Lösungsmittel, ein oder mehrere Tenside oder eine Kombination davon enthält.

7. Verfahren nach einem der Ansprüche 1-6, wobei die Polystyrolsulfonatkonzentration in der Distanzflüssigkeit zwischen 0,6 % und 5,0 % in Bezug auf das Wassergewicht liegt.

8. Verfahren zur Verdrängung von Flüssigkeit in einem Ringraum, wobei der Ringraum anfangs mit einer ersten Flüssigkeit gefüllt ist, umfassend:
(i) Vorbereiten einer zweiten Flüssigkeit, die Wasser, Polystyrolsulfonat und eine Mischung von Schwebstoffen umfasst, wobei die Schwebstoffe so ausgewählt sind, dass die Mischung zumindest eine trimodale Teilchengrößenverteilung besitzt; und
(ii) Pumpen der zweiten Flüssigkeit in den Ringraum, so dass sie die erste Flüssigkeit verdrängt, wobei die Dichte der Distanzflüssigkeit höher als etwa 1920 kg/m³ ist.

9. Verfahren nach Anspruch 8, wobei die Schwebstoffe eine Kombination von Siliziumdioxid und Baryt oder eine Kombination von Calziumcarbonat und Baryt umfassen.

10. Verfahren nach Anspruch 8 oder 9, wobei das Molekulargewicht des Polystyrolsulfonats größer als 800.000 Daltons und bis zu 6.000.000 Daltons ist.

11. Verfahren nach einem der Ansprüche 8-10, wobei ein erster Schwebstoff eine mittlere Teilchengröße zwischen etwa 100 und 300 µm besitzt, ein zweiter Schwebstoff eine mittlere Teilchengröße zwischen etwa 10 und 30 µm besitzt und ein dritter Schwebstoff eine mittlere Teilchengröße zwischen etwa 1 und 3 µm besitzt.

12. Verfahren nach einem der Ansprüche 8-11, wobei der Feststoffvolumenanteil in der Distanzflüssigkeit zwischen etwa 0,50 und 0,55 liegt.

## Revendications

1. Procédé de cimentation d'un trou de forage dans un puits souterrain, dans lequel le trou de forage est initialement rempli d'un fluide de forage, comprenant :
(i) la préparation d'un fluide tampon comprenant de l'eau, du polystyrène sulfonate, et un mélange de matériaux particulaires, dans lequel les matériaux particulaires sont choisis de telle sorte que le mélange possède au moins une répartition granulométrique trimodale ;
(ii) le pompage du fluide tampon dans le puits de telle sorte qu'il déplace le fluide de forage ; et
(iii) le pompage d'un coulis de ciment dans le puits de telle sorte qu'il déplace le fluide tampon,
dans lequel la densité du fluide tampon est supérieure à environ 1 920 kg/m³, dans lequel le polystyrène sulfonate consiste en un polystyrène sulfonate d'un poids moléculaire supérieur à 800 000 Daltons et inférieur ou égal à 6 000 000 Daltons,
et dans lequel le puits possède une température de circulation supérieure à environ 150 °C et inférieure ou égale à 290 °C.

2. Procédé selon la revendication 1, dans lequel les matériaux particulaires comprennent une combinaison de silice et de baryte, ou une combinaison de carbonate de calcium et de baryte.

3. Procédé selon l'une quelconque des revendications 1 à 2, dans lequel un premier matériau particulaire possède une taille moyenne de particules allant d'environ 100 à 300 µm, un deuxième matériau particulaire possède une taille moyenne de particules allant d'environ 10 à 30 µm, et un troisième matériau particulaire présente une taille moyenne de particules allant d'environ 1 à 3 µm.

4. Procédé selon l'une quelconque des revendications 1 à 3, dans lequel le fluide tampon comprend en outre un minerai argileux.

5. Procédé selon l'une quelconque des revendications 1 à 4, dans lequel la fraction volumique à l'état solide dans le fluide tampon va d'environ 0,50 à 0,55.

6. Procédé selon l'une quelconque des revendications 1 à 5, dans lequel le fluide tampon comprend un solvant mutuel, un ou plusieurs tensioactifs ou une combinaison de ceux-ci.

7. Procédé selon l'une quelconque des revendications 1 à 6, dans lequel la concentration en polystyrène sulfonate dans le fluide tampon va de 0,6 % à 5,0 % par poids d'eau.

8. Procédé pour le déplacement d'un fluide dans un espace annulaire, dans lequel l'espace annulaire est initialement rempli d'un premier fluide, comprenant :
(i) la préparation d'un second fluide comprenant de l'eau, du polystyrène sulfonate et un mélange de matériaux particulaires, dans lequel les matériaux particulaires sont choisis de telle sorte que le mélange possède au moins une répartition granulométrique trimodale ; et
(ii) le pompage du second fluide à l'intérieur de l'espace annulaire de telle sorte qu'il déplace le premier fluide, dans lequel la densité du fluide tampon est supérieure à environ 1 920 kg/m³.

9. Procédé selon la revendication 8, dans lequel les matériaux particulaires comprennent une combinaison de silice et de baryte, ou une combinaison de carbonate de calcium et de baryte.

10. Procédé selon la revendication 8 ou 9, dans lequel le poids moléculaire du polystyrène sulfonate est supérieur à 800 000 Daltons et inférieur ou égal à 6 000 000 Daltons

11. Procédé selon l'une quelconque des revendications 8 à 10, dans lequel un premier matériau particulaire possède une taille moyenne de particules allant d'environ 100 à 300 µm, un deuxième matériau particulaire possède une taille moyenne de particules allant d'environ 10 à 30 µm, et un troisième matériau particulaire présente une taille moyenne de particules allant d'environ 1 à 3 µm.

12. Procédé selon l'une quelconque des revendications 8 à 11, dans lequel la fraction volumique à l'état solide dans le fluide tampon va d'environ 0,50 à 0,55.
